# FASCICULE DE BREVET EUROPEEN

(11) **EP 2 734 820 B1**
(45) Date de publication et mention de la délivrance du brevet: **27.05.2015**
(21) Numéro de dépôt: 12735159.1
(22) Date de dépôt: 17.07.2012
(51) Int. Cl.: G01K 1/14, G01K 7/04, G01N 23/20, G01K 1/04

(54) **PORTE-ÉCHANTILLON À THERMOCOUPLE INTÉGRÉ**
PROBENHALTER MIT INTEGRIERTEM THERMOELEMENT
SAMPLE HOLDER WITH INTEGRATED THERMOCOUPLE

(30) Priorité: 21.07.2011 FR 1156612
(43) Date de publication de la demande: 28.05.2014
(73) Titulaire: Commissariat à l'Énergie Atomique et aux Énergies Alternatives, 75015 Paris (FR); Centre National de la Recherche Scientifique, 75016 Paris (FR)
(72) Inventeur: PODOR, Renaud, F-30210 Cabrieres (FR); PAILHON, Damien, F-30330 Tresques (FR); BRAU, Henri-Pierre, F-84100 Orange (FR); RAVAUX, Johann, F-84000 Avignon (FR)
(74) Mandataire: Ahner, Philippe
(86) Numéro de dépôt international: PCT/EP2012/063999
(87) Numéro de publication internationale: WO 2013/011022

(56) Documents cités:
- WO-A1-00/23795
- GB-A- 1 324 982
- US-A- 3 267 732
- US-A- 3 491 581
- US-A- 5 147 137
- GARRA J ET AL: "The effect of ferroelectric polarization on the interaction of water and methanol with the surface of LiNbO3(0001)", SURFACE SCIENCE, NORTH-HOLLAND PUBLISHING CO, AMSTERDAM, NL, vol. 603, no. 8, 15 avril 2009 (2009-04-15), pages 1106-1114, XP026035194, ISSN: 0039-6028, DOI: 10.1016/J.SUSC.2009.02.034 [extrait le 2009-03-06]
- HITI M ET AL: "Multizone Furnace for Analysis of Fixed-Point Realizations in the Range from 1,000Â DEG C to 1,700Â DEG C", INTERNATIONAL JOURNAL OF THERMOPHYSICS ; JOURNAL OF THERMOPHYSICAL PROPERTIES AND THERMOPHYSICS AND ITS APPLICATIONS, KLUWER ACADEMIC PUBLISHERS-CONSULTANTS BUREAU, NE, vol. 29, no. 1, 8 janvier 2008 (2008-01-08), pages 241-249, XP019573769, ISSN: 1572-9567

## Description

### DOMAINE TECHNIQUE

La présente invention est relative à un porte-échantillon notamment pour appareil de caractérisation de matériaux par interaction rayonnement/matériaux tels que des microscopes électroniques, des diffractomètres de rayons X, des spectromètres infrarouges ou ultraviolets.

Les avancées de la miniaturisation ont permis d'équiper ces appareils de dispositifs de chauffage permettant de suivre in situ l'évolution d'une ou plusieurs propriétés du matériau à caractériser en fonction de la température.

### ÉTAT DE LA TECHNIQUE ANTÉRIEURE

Dans les diffractomètres de rayons X, l'échantillon est posé sur une platine chauffante, ce qui permet par exemple de suivre, lors du traitement thermique, les changements de phases cristallines du matériau de l'échantillon.

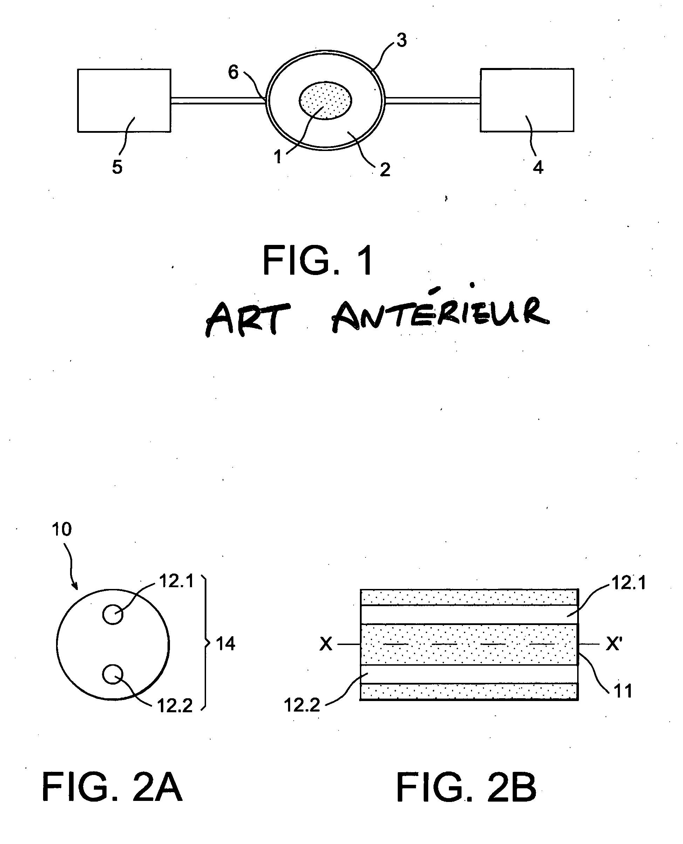

Dans les microscopes électroniques à balayage, la régulation thermique du dispositif de chauffage de type enceinte dans lequel est placé le porte-échantillon, est réalisée par un thermocouple, ce thermocouple étant également utilisé pour évaluer la température de l'échantillon. On peut se référer à la figure 1 qui montre très schématiquement en vue de dessus un échantillon 1 supporté par un porte-échantillon de type creuset 2. La plus grande dimension de l'échantillon en contact avec le porte-échantillon peut être de l'ordre de la dizaine de micromètres à environ un ou quelques millimètres.

Le porte-échantillon 2 est placé dans une enceinte chauffante 3 branchée à une alimentation électrique 4. Un thermocouple 5 a sa soudure chaude 6 en contact avec une surface extérieure de l'enceinte chauffante 3. Le thermocouple sert à la fois de dispositif de mesure de la température et de régulation de la température de l'enceinte chauffante.

Les utilisateurs se sont aperçus que couramment des écarts de température très importants, parfois supérieurs à la centaine de degrés Celsius, pouvaient exister entre la température réelle et la température donnée par le thermocouple. Le point de mesure de la température se situe au niveau de la soudure chaude du thermocouple. Ce point de mesure est trop éloigné de l'échantillon. Des différences de température de plus de 150 °C ont été relevées entre la température de l'échantillon et la température délivrée par le thermocouple.

De plus, la position de l'échantillon n'est pas forcément toujours la même dans l'enceinte chauffante, ce qui fait que les mesures de température ne sont pas reproductibles.

Pour améliorer la précision de la mesure de température, il est connu d'utiliser une référence externe pour calibrer le thermocouple. Cette référence externe peut être la température de fusion d'un métal, par exemple l'or (1064°C) ou l'argent (962°C).

On procède de la manière suivante. On place l'échantillon sur le porte-échantillon dans le four. On dispose aussi sur le porte-échantillon à proximité de l'échantillon un morceau du métal choisi pour le calibrage. On chauffe le four jusqu'à ce que le morceau de métal fonde. L'évolution de la température du morceau de métal, peut être suivie grâce au microscope électronique à balayage. On considère alors que la température de l'échantillon est la température de fusion du métal. On mesure alors le décalage en température entre cette température de fusion et la température donnée par le thermocouple. Ce décalage en température va être systématiquement ajouté ou soustrait à la température donnée par le thermocouple de régulation du four lors de mesures de la température d'échantillons réalisées ultérieurement.

Un inconvénient de cette méthode est qu'elle ne convient que si l'échantillon est chauffé dans une gamme de températures proche de celle pour laquelle la calibration a été réalisée car l'écart entre la température réelle de l'échantillon et la température donnée par le thermocouple n'est pas constant sur une large gamme de températures.

Dans les autres appareils de caractérisation de matériaux cités plus haut le même problème se pose.

Le brevet US 3 267 732 montre un porte-échantillon avec un corps porte-échantillon, un thermocouple, une gaine de protection du corps porte-échantillon et des moyens de guidage des conducteurs reliés au thermocouple conçus pour les faire sortir à l'opposé de la surface d'accueil de l'échantillon par rapport au corps porte-échantillon.

Le brevet 5 147 137 montre un porte-échantillon dans lequel les conducteurs reliés au thermocouple sortent du corps à l'opposé de la surface d'accueil de l'échantillon par rapport au corps.

### EXPOSÉ DE L'INVENTION

La présente invention a pour but dé proposer un porte-échantillon permettant de connaitre avec précision la température d'un échantillon reposant sur ce porte-échantillon. Le porte-échantillon est notamment destiné à être utilisé avec un appareil de caractérisation de matériaux dans lequel l'échantillon est chauffé et l'évolution d'une ou plusieurs propriétés du matériau est suivie en fonction d'une variation de la température.

Plus précisément la présente invention est un porte-échantillon permettant de connaître avec précision la température d'un échantillon qu'il porte et cela sans référence externe. La précision obtenue est de plus ou moins 5°C.

Un autre but de l'invention est de réaliser un porte-échantillon permettant de connaître avec précision la température d'un échantillon qu'il porte, la température pouvant varier sur une gamme de températures très large, par exemple comprise typiquement entre environ 20°C et 1500°C.

La présente invention concerne un porte-échantillon pour appareil de caractérisation de matériaux comportant un corps porte-échantillon ayant une surface d'accueil de l'échantillon sur laquelle se trouve la jonction de mesure d'un thermocouple.

Plus précisément la présente invention concerne porte-échantillon comportant :
un corps porte-échantillon en matériau diélectrique réfractaire,
un thermocouple pour mesurer la température de l'échantillon, notamment lors d'un chauffage, formé de deux conducteurs de natures différentes, reliés en une jonction de mesure, le corps porte-échantillon comportant une surface d'accueil sur laquelle est collée la jonction de mesure, cette surface d'accueil étant la surface d'accueil de l'échantillon,
une gaine de protection du corps porte-échantillon qui entoure le corps porte-échantillon en formant un rebord autour de la surface d'accueil de manière à délimiter une cuvette dont le fond est la surface d'accueil de l'échantillon.

Le porte-échantillon selon l'invention comporte en outre, pour éviter tout contact électrique direct entre les conducteurs, des moyens de guidage, dits premiers moyens de guidage, des conducteurs pour les isoler électriquement l'un de l'autre à partir de la jonction de mesure, les conducteurs sortant des premiers moyens dé guidage à l'opposé de la surface d'accueil par rapport au corps porte-échantillon.

Dans un mode de réalisation, le corps porte-échantillon peut être un tube bifilaire avec deux trous traversants longitudinaux, la surface d'accueil étant une surface d'extrémité sensiblement transversale du tube bifilaire, les premiers moyens de guidage comprenant les deux trous traversants.

Dans une variante, le corps porte-échantillon peut être un barreau plein, la surface d'accueil étant une surface d'extrémité sensiblement transversale du barreau, les premiers moyens de guidage comprenant deux rainures sensiblement longitudinales portées par le barreau.

Selon l'invention, pour que les conducteurs soient accessibles du côté de la surface d'accueil, le corps porte-échantillon et/ou la gaine de protection comportent des seconds moyens de guidage pour guider les conducteurs depuis leur sortie des premiers moyens de guidage vers la surface d'accueil.

Les seconds moyens de guidage peuvent être des rainures latérales portées par le corps porte-échantillon et/ou par la gaine de protection.

Dans un souci de protection des conducteurs, on peut agencer la gaine de protection de manière à ce qu'elle dépasse du corps porte-échantillon à l'opposé de la surface d'accueil par rapport au corps porte-échantillon et délimite un espace dans lequel les conducteurs à la sortie des premiers moyens de guidage sont scellés.

La gaine de protection peut être un tube monofilaire enfilé autour du tube bifilaire ou du barreau.

Toujours dans un souci de conserver les conducteurs isolés électriquement l'un de l'autre, la gaine de protection peut être pourvue d'encoches d'écartement sensiblement radiales pour écarter les conducteurs à leur sortie des premiers moyens de guidage.

La jonction de mesure étant fixée à la surface d'accueil par du ciment réfractaire, on s'arrange pour que la surface d'accueil soit sensiblement plane notamment au niveau de la jonction de mesure et du ciment de manière à obtenir un bon couplage thermique par contact entre un échantillon posé sur la surface d'accueil et la jonction de mesure.

Le porte-échantillon peut comporter en outre une nacelle d'accueil de l'échantillon placée dans la cuvette, cette nacelle étant amovible. Il est ainsi possible d'utiliser des échantillons liquides et/ou qui risquent de se liquéfier lors de l'utilisation.

La présente invention concerne également un ensemble comportant un porte-échantillon ainsi caractérisé et un dispositif de chauffage du porte-échantillon, le dispositif de chauffage comportant un thermocouple pour asservir sa température, le thermocouple du porte-échantillon servant à asservir la température du dispositif de chauffage.

La présente invention concerne également un appareil de caractérisation de matériaux par interaction rayonnement/matériaux comportant un ensemble ainsi caractérisé.

Enfin la présente invention concerne également un procédé de réalisation d'un porte-échantillon comportant les étapes suivantes :
fourniture d'un corps porte-échantillon en matériau diélectrique réfractaire possédant une surface d'accueil de l'échantillon et d'un thermocouple possédant deux conducteurs en matériaux de nature différente reliés entre eux en une jonction de mesure,
fixation de la jonction de mesure sur la surface d'accueil avec un ciment réfractaire,
dans lequel le corps porte-échantillon possède des moyens de guidage dits premiers moyens de guidage des conducteurs pour les isoler électriquement l'un de l'autre à partir de la jonction de mesure,
mise en place des conducteurs dans les premiers moyens de guidage de manière à ce qu'ils sortent des premiers moyens de guidage à l'opposé de la surface d'accueil par rapport au corps porte-échantillon,
polissage de la jonction de mesure et du ciment réfractaire pour parfaire l'état de surface et la planéité de la surface d'accueil,
recuit du porte-échantillon pour faire dégazer le ciment réfractaire,
positionnement du corps porte-échantillon dans une gaine de protection en laissant dépasser la gaine de protection au-delà de la surface d'accueil de manière à former une cuvette ayant comme fond la surface d'accueil et
solidarisation du corps porte-échantillon avec la gaine de protection.

On peut réitérer le couple d'étapes de polissage et de recuit autant de fois qu'il est nécessaire en remettant du ciment avant chaque étape de polissage de manière à obtenir une planéité et un état de surface voulus de la surface d'accueil.

Selon l'invention, le corps porte-échantillon ou la gaine de protection comporte en outre des seconds moyens de guidage pour guider les conducteurs depuis leur sortie des premiers moyens de guidage vers la surface d'accueil de manière à ce que les conducteurs soient accessibles du côté de la surface d'accueil, le procédé comprenant une étape de mise en place des conducteurs dans les seconds moyens de guidage, cette étape de mise en place ayant lieu avant l'étape positionnement du corps porte-échantillon dans la gaine de protection, si les seconds moyens de guidage sont portés par le corps porte-échantillon ou après l'étape de solidarisation si les seconds moyens de guidage sont portés par la gaine de protection.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
la figure 1 (déjà décrite), représente en vue de dessus un porte-échantillon de l'art antérieur placé dans un dispositif de chauffage d'un appareil de caractérisation de matériaux par interaction rayonnement/matériaux ;
les figures 2A à 2F montrent différentes vues des constituants du porte-échantillon objet de l'invention ;
les figures 3A, 3B montrent deux exemples de porte-échantillons, le premier (3A) étant conforme à l'invention et le deuxième (3B) selon un mode différent de l'invention, prêts à coopérer avec un dispositif de chauffage d'un appareil de caractérisation de matériaux par interaction rayonnement/matériaux et la figure 3C est une coupe longitudinale d'un autre exemple de porte-échantillon objet de l'invention ;
les figures 4A, 4B illustrent des étapes d'un procédé de fabrication d'un porte-échantillon non conforme à l'invention ;
la figure 5 est une courbe d'étalonnage du porte-échantillon de la figure 3A, lors d'un essai de montée en température dont les résultats sont consignés dans le tableau 2 ;
la figure 6 est une courbe d'étalonnage du porte-échantillon de la figure 3A, lors d'un essai de montée en température dont les résultats sont consignés dans le tableau 3 ;
la figure 7 montre les variations de la température en fonction du temps d'un échantillon placé dans le porte-échantillon de la figure 3A, ce porte-échantillon étant soumis à un essai de montée en température suivi d'un refroidissement dont les résultats sont consignés dans le tableau 4.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

On va maintenant décrire un premier exemple de porte-échantillon conforme à l'invention.

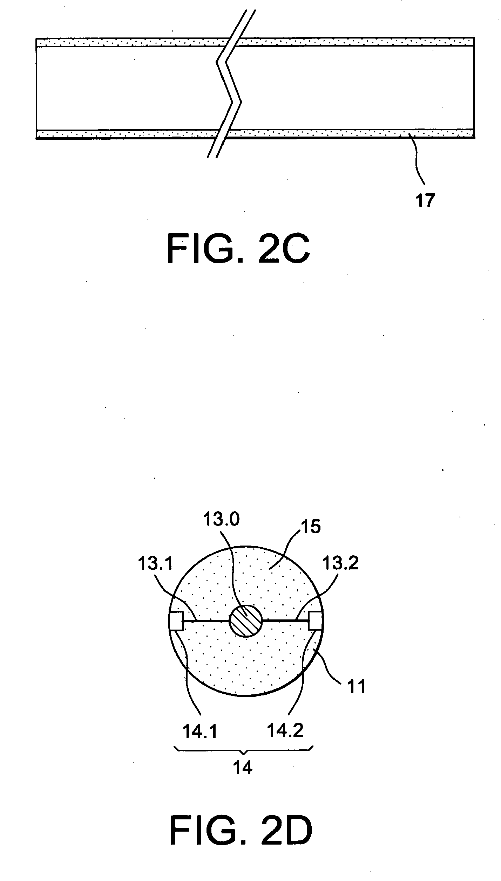

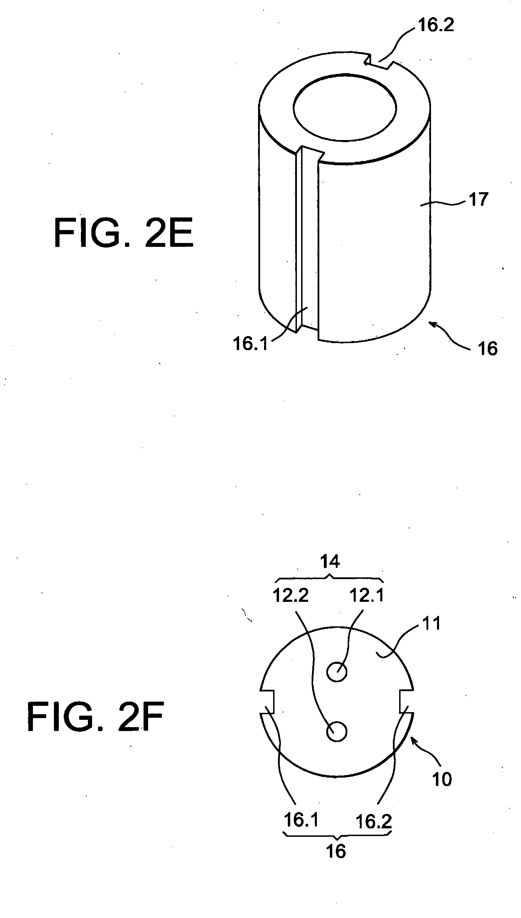

On se réfère aux figures 2A, 2B, 2C, 2D, 2E, 2F qui montrent respectivement les constituants d'un porte-échantillon pour appareil de caractérisation de matériaux par interaction rayonnement/matériau équipé d'un dispositif de chauffage. L'appareil de caractérisation peut être par exemple un microscope électronique à balayage, un diffractomètre de rayons X un spectromètre infrarouge ou ultraviolet.

Le porte-échantillon comporte un corps porte-échantillon 10 en matériau diélectrique réfractaire et un thermocouple 13 ainsi qu'une gaine de protection 17.

Le corps porte-échantillon 10 est vu sur les figures 2A, 2B, 2D, 2F et la gaine de protection 17 est montrée sur les figures 2C, 2E.

On rappelle qu'un thermocouple (ou couple thermoélectrique) comporte deux conducteurs 13.1, 13.2 en matériaux différents, ces matériaux étant des métaux ou des semi-conducteurs 13.1, 13.2. Ces deux conducteurs 13.1, 13.2 ont chacun une première extrémité, ces premières extrémités sont reliées directement entre elles et forment une jonction de mesure 13.0 ou encore soudure chaude. Cette jonction de mesure 13.0 est généralement en forme de boule. Chaque conducteur 13.1, 13.2 comporte une seconde extrémité 13.e1, 13.e2 qui est libre. Les deux secondes extrémités 13.e1, 13.e2 sont destinées à être reliées à une même jonction de référence aux bornes de laquelle on va mesurer une différence de potentiel. La jonction de référence n'est pas représentée. Cette différence de potentiel dépend à la fois de la température de la jonction de mesure 13.0, du profil de température appliqué et de la température de la jonction de référence.

Le choix de la nature des conducteurs 13.1, 13.2 du thermocouple 13 est conditionné par la température maximale que doit prendre l'échantillon. Il peut s'agir de platine Pt pour l'un des conducteurs 13.1, 13.2 et d'un alliage platine rhodium à 10% pour l'autre conducteur. Un tel thermocouple de type S permet de faire des mesures de température précises entre environ 0°C et 1500°C sous toute atmosphère qu'elle soit neutre, réductrice ou oxydante et même sous vide.

Le corps porte-échantillon 10 comporte une surface d'accueil 11 sur laquelle est fixée la jonction de mesure 13.0. Cette surface d'accueil 11 est également une surface d'accueil de l'échantillon. La fixation peut se faire avec un ciment réfractaire 15.

Le ciment réfractaire 15 est choisi de manière à ce qu'il reste stable chimiquement sur la plage d'utilisation en température de l'échantillon.

Dans les applications visées où la température maximum à atteindre est de l'ordre de 1500°C, le ciment réfractaire 15 sera de préférence à base de zircone ou oxyde de zirconium.

Sur les figures 2A, 2F le corps porte-échantillon 10 est représenté en coupe transversale et sur la figure 2B il est représenté en coupe longitudinale. Sur la figure 2D, il est représenté en vue de dessus, et la surface d'accueil 11 équipée de la jonction de mesure 13.0 est visible. Dans ce premier exemple, le corps porte-échantillon 10 prend la forme d'un tube bifilaire construit autour d'un axe longitudinal XX'. Par tube bifilaire, on entend un barreau muni de deux trous traversants 12.1, 12.2 orientés sensiblement parallèlement à cet axe longitudinal XX'. La surface d'accueil 11 est, dans cet exemple, une surface transversale d'extrémité du tube bifilaire.

Le choix du matériau diélectrique réfractaire du corps porte-échantillon 10 est conditionné par la température maximale que doit prendre l'échantillon. Il peut s'agir de céramique telle que de l'alumine qui supporte des températures jusqu'à au moins 1500°C.

La gaine de protection 17 entoure le corps porte-échantillon 10 et forme un rebord autour de la surface d'accueil 11 de manière à délimiter une cuvette 18 d'accueil de l'échantillon, cette cuvette 18 ayant pour fond la surface d'accueil 11 de l'échantillon.

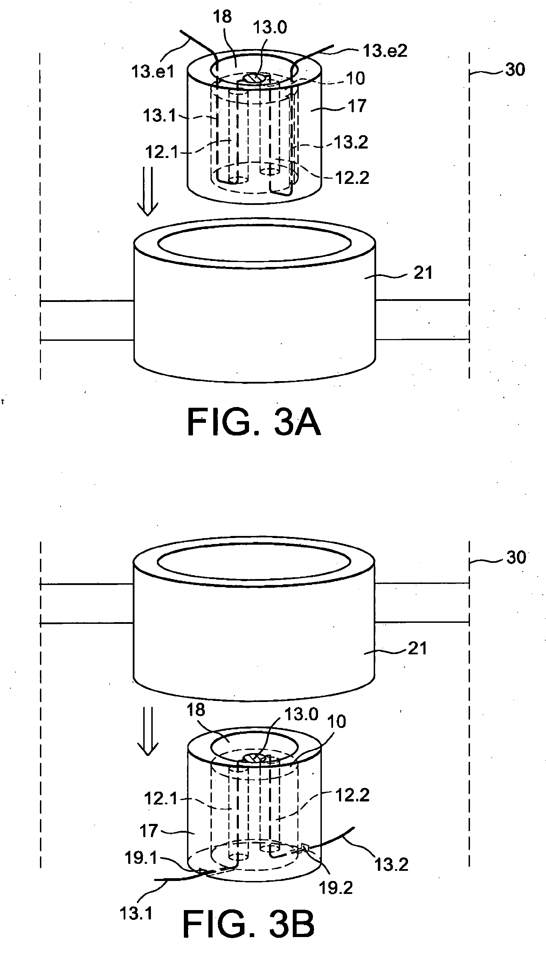

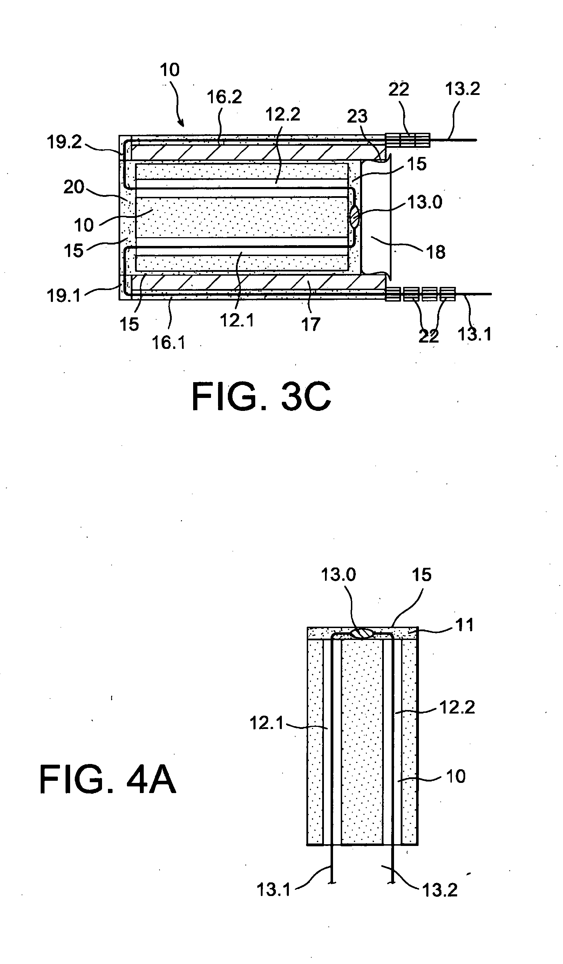

On peut se référer aux figures 3A, 3B, 3C qui montrent la gaine de protection 17 et la cuvette 18. La gaine de protection 17 est aussi réalisée dans un matériau diélectrique réfractaire, par exemple de la céramique telle que de l'alumine.

La gaine 17 peut être un tube en céramique monofilaire comme sur les figures 2C et 2E. Sur la figure 2E, la gaine de protection 17 est représentée en trois dimensions.

Dans une application de microscope électronique à balayage, le corps porte-échantillon 10 peut voir un diamètre extérieur de 5 mm, une longueur de 8 mm et deux trous traversants 12.1, 12.2 de 1 mm de diamètre, diamétralement opposés espacés l'un de l'autre d'environ 1 mm.

Dans l'exemple considéré, la gaine de protection aura un diamètre extérieur de 7 mm, son diamètre intérieur sera de 6 mm de manière à pouvoir s'enfiler autour du corps porte-échantillon 10 dont le diamètre extérieur est de 5 mm. De manière à dépasser au moins du côté de la jonction de mesure 13.0 pour délimiter la cuvette 18, la gaine 17 a une longueur supérieure à celle du corps porte-échantillon 10. Dans l'exemple traité la longueur de la gaine 17 sera de 10mm.

On se réfère maintenant à la figure 3A et/ou à la figure 3B. Ces figures montrent deux exemples de porte-échantillons, le premier (3A) étant conforme à l'invention et le deuxième (3B) selon un mode différent de l'invention, prêts à être placés dans un dispositif de chauffage 21, qui ici est tubulaire. Ce dispositif de chauffage est celui d'un appareil de caractérisation de matériaux par interaction rayonnement/matériaux. On a schématisé l'appareil de caractérisation de matériaux par le rectangle en pointillés portant la référence 30.

Le corps porte-échantillon 10 en matériau diélectrique réfractaire est muni de moyens de guidage 14 dits premiers moyens de guidage des conducteurs 13.1, 13.2 pour les isoler électriquement l'un de l'autre à partir de la jonction de mesure 13.0. Ces premiers moyens de guidage 14 vont maintenir les conducteurs 13.1, 13.2 du thermocouple 13 isolés électriquement l'un de l'autre et sans autre contact électrique direct que la jonction de mesure 13.0.

Dans l'exemple décrit des figures 2A, 2B, 3A, 3B, les premiers moyens de guidage 14 sont matérialisés par les trous traversants 12.1, 12.2 du corps porte-échantillon 10. Les conducteurs 13.1, 13.2 du thermocouple 13 sont insérés chacun dans un des trous traversants 12.1, 12.2 et émergent à une extrémité du corps porte-échantillon 10 opposée à celle où se trouve la surface d'accueil 11 portant la jonction de mesure 13.0.

Dans l'exemple du corps porte-échantillon 10 bifilaire de la figure 2A chacun des conducteurs 13.1, 13.2 est inséré dans un des trous traversants 12.1, 12.2.

En variante illustrée sur la figure 2D, le corps porte-échantillon 10 pourrait prendre la forme d'un barreau plein muni de deux rainures 14.1, 14.2 orientées longitudinalement, de préférence diamétralement opposées. Les premiers moyens de guidage 14 sont alors matérialisés par ces rainures 14.1, 14.2. Les rainures sont destinées à loger les conducteurs 13.1, 13.2, la jonction de mesure 13.0 se trouvant toujours fixée sur une surface transversale d'extrémité du barreau, cette surface transversale d'extrémité formant la surface d'accueil 11. Pour garantir un bon maintien des conducteurs 13.1, 13.2 dans les rainures 14.1, 14.2, on peut les sceller avec du ciment réfractaire 15.

Les extrémités libres 13.e1, 13.e2 des conducteurs 13.1, 13.2 sont alors accessibles à une extrémité du corps porte-échantillon 10 opposée à celle formant la surface d'accueil 11.

Selon l'invention, les extrémités libres des conducteurs 13.1, 13.2 du thermocouple au lieu d'être accessibles du côté de l'extrémité du corps porte-échantillon 10 opposée à celle où se trouve la jonction de mesure 13.0 sont accessibles du côté de l'extrémité portant la surface d'accueil 11.

Dans ce cas, le corps porte-échantillon 10 comprend en outre des seconds moyens de guidage 16 pour ramener les conducteurs 13.1, 13.2 du thermocouple 13 vers la surface d'accueil 11 du corps porte-échantillon 10. Cette variante est illustrée sur la figure 2F.

Le corps porte-échantillon 10 compote latéralement deux rainures 16.1, 16.2 orientées longitudinalement, de préférence diamétralement opposées et les seconds moyens de guidage 16 sont matérialisés par ces rainures 16.1, 16.2. Elles sont destinées à loger les conducteurs 13.1, 13.2 pour les guider et les maintenir dès leur sortie du trou traversant 14.1, 14.2 et les orienter vers l'extrémité portant la jonction de mesure 13.0.

Les rainures 16.1, 16.2 de cette paire sont diamétralement opposées et de préférence placées dans un plan décalé par rapport à un plan passant par trous traversants 12.1, 12.2. Pour garantir un bon maintien des conducteurs 13.1, 13.2 dans les rainures 16.1, 16.2, on peut les sceller avec du ciment réfractaire 15.

Dans le cas où le corps porte-échantillon 10 ne possède pas ces trous traversants, les seconds moyens de guidage 16 peuvent aussi être matérialisés par des rainures 16.1, 16.2 qui coexistent avec celles des premiers moyens de guidage 14. Cette variante n'est pas représentée pour ne pas multiplier inutilement le nombre de figures.

Il est préférable que la gaine de protection 17 dépasse du corps porte-échantillon 10 également à l'extrémité opposée à celle portant la jonction de mesure 13.0, pour protéger les conducteurs 13.1, 13.2 à leur sortie des premiers moyens de guidage 14 et éviter les contacts parasites. Cette configuration convient qu'ils soient ramenés ou non vers la jonction de mesure 13.0.

On peut se référer à la figure 3C. La gaine de protection 17 délimite un espace 20 qui englobe l'extrémité du corps porte-échantillon 10 opposée à celle portant la jonction de mesure 13.0. Les conducteurs 13.1, 13.2 débouchent du corps porte-échantillon 10 au niveau de cet espace 20. Cet espace 20 est de préférence empli de ciment réfractaire 15 pour maintenir en position les conducteurs 13.1, 13.2 et les protéger.

La gaine de protection 17 peut être dotée de deux encoches d'écartement 19.1, 19.2 de préférence sensiblement radiales pour guider les conducteurs 13.1, 13.2 lorsqu'ils émergent des premiers moyens de guidage 14 à l'extrémité du corps porte-échantillon 10 opposée à celle portant la surface d'accueil 11. Ces deux encoches d'écartement 19.1, 19.2 sont de préférence agencées dans le prolongement l'une de l'autre pour éviter tout contact parasite entre les deux conducteurs 13.1, 13.2.

Il est possible que les seconds moyens de guidage 16 ne soient pas portés par le corps porte-échantillon 10 mais par la gaine de protection 17 comme sur la figure 3C.

Dans cette configuration, la gaine de protection 17 comporte, extérieurement, deux rainures longitudinales 16.1, 16.2 destinées à loger les conducteurs 13.1, 13.2 pour les remonter vers l'extrémité du corps porte-échantillon 10 dotée de la surface d'accueil 11.

On va maintenant décrire un exemple de procédé de fabrication d'un porte-échantillon objet de l'invention.

On fournit un corps porte-échantillon 10 et un thermocouple 13. Le thermocouple 13 comporte deux conducteurs 13.1, 13.2 reliés entre eux en une jonction de mesure 13.0. Le corps porte-échantillon 10 est doté d'une surface d'accueil 11 pour un échantillon à analyser. On prévoit également que le corps porte-échantillon 10 comporte des premiers moyens de guidage 14 des conducteurs 13.1, 13.2 pour les isoler électriquement l'un de l'autre à partir de la jonction de mesure 13.0.

On usine la surface d'accueil 11 de manière que son état de surface soit aussi lisse que possible.

On fixe la jonction de mesure 13.0 sur la surface d'accueil 11 et on place les conducteurs 13.1, 13.2 dans les premiers moyens de guidage 14 en s'assurant qu'ils n'entrent pas en contact électrique direct. Le maintien de la jonction de mesure 13.0 sur la surface d'accueil est réalisé par du ciment réfractaire 15.

On effectue un recuit de l'ensemble porte-échantillon 10-thermocouple 13 à une température maximale prévue lors de l'utilisation de l'échantillon à placer sur la surface d'accueil 11. Ainsi le ciment réfractaire 15 va durcir et dégazer si des éléments volatils sont à éliminer. Si des éléments volatils subsistaient dans le ciment réfractaire 15 lors de l'utilisation du porte-échantillon, ils pourraient interagir chimiquement avec une paroi du dispositif dé chauffage dans lequel le porte-échantillon sera placé lors de son utilisation.

On polit la surface d'accueil 11 du corps porte-échantillon 10 sur laquelle est fixée la jonction de mesure 13.0 de manière à parfaire son état de surface et sa planéité. Ce polissage, de préférence mécanique attaque la jonction de mesure et le ciment en les aplanissant.

On peut être amené à réitérer une ou plusieurs fois les étapes de polissage et. de dépôt de ciment réfractaire au niveau de la surface d'accueil 11 jusqu'à ce que l'on ait atteint un état de surface et une planéité souhaités au niveau de la surface d'accueil 11. On peut se référer à la figure 4A.

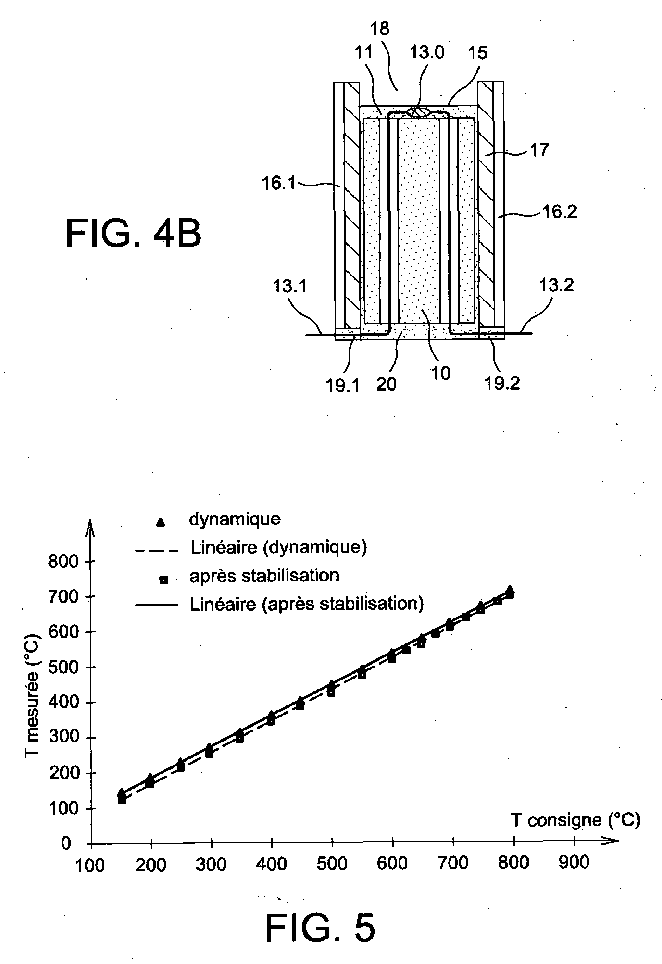

Selon l'invention, le corps porte-échantillon 10 est équipé des seconds moyens de guidage, on loge donc des conducteurs dans les seconds moyens de guidage pour les ramener du côté de la surface d'accueil 11 et, de préférence, on les scelle en position avec du ciment réfractaire 15. Le corps porte-échantillon ne comporte pas les seconds moyens de guidage dans l'exemple illustré aux figures 4.

On insère le corps porte-échantillon 10 dans la gaine de protection 17 et après les avoir positionnés l'un par rapport à l'autre, on les solidarise l'un avec l'autre avec du ciment réfractaire 15, en laissant la gaine de protection 17 dépasser du corps porte-échantillon 10 au niveau de la surface d'accueil 11.

Si la gaine de protection 17 dépasse le corps porte-échantillon 10 à son extrémité opposée à celle portant la surface d'accueil 11 et délimite l'espace 20 dans lequel les conducteurs 13.1, 13.2 émergent du corps porte-échantillon, on scelle les conducteurs 13.1, 13.2 dans cet espace 20 avec du ciment réfractaire 15.

Si la gaine de protection 17 comporte des encoches d'écartement 19.1, 19.2 des conducteurs 13.1, 13.2, on loge chaque conducteur 13.1, 13.2 dans une encoche 19.1, 19.2 et on les scelle avec du ciment réfractaire 15 (figure 4B). Sur la figure 4B, le porte-échantillon peut être considéré comme achevé si les seconds moyens de guidage ne sont pas prévus.

Selon l'invention, la gaine de protection 17 comporte les seconds moyens de guidage 16, on loge donc les conducteurs 13.1, 13.2 dans ces seconds moyens de guidage 16 pour les ramener du côté de la surface d'accueil 11 et on les scelle avec du ciment réfractaire 15 (voir figure 3C).

Le porte-échantillon objet n'a plus qu'à être placé dans un dispositif de chauffage 21, ce dernier pouvant l'entourer comme illustré sur les figures 3A et 3B. Sur ces figures, le dispositif de chauffage 21 est tubulaire et son diamètre intérieur est légèrement supérieur au diamètre extérieur de la gaine de protection 17 afin qu'elle puisse juste coulisser dedans.

Sur la figure 3A, le porte-échantillon est descendu dans le dispositif de chauffage 21 et y pénètre par une ouverture supérieure dudit dispositif de chauffage, les conducteurs 13.1, 13.2 sont accessibles du côté de la surface d'accueil 11. Sur la figure 3B, le porte-échantillon est remonté dans le dispositif de chauffage 21 à partir d'une ouverture inférieure dudit dispositif de chauffage. Les conducteurs sont accessibles à l'opposé de la surface d'accueil par rapport au corps porte-échantillon.

Les conducteurs 13.1, 13.2 qui émergent du porte-échantillon peuvent être protégés par des perles de matériau diélectrique réfractaire 22 enfilées sur la partie des conducteurs émergeant du porte-échantillon. Les conducteurs 13.1, 13.2 ainsi protégés restent souples. Les perles 22 peuvent être des tronçons tubulaires ayant un diamètre intérieur de 0,6 mm et un diamètre extérieur de 1 mm. Leur longueur peut être de quelques centimètres, pour protéger les conducteurs du thermocouple au bord du porte-échantillon. Il est bien sûr possible de protéger la totalité des conducteurs qui sortent du porte-échantillon.

L'extrémité libre des conducteurs est destinée à être reliée à un câble de compensation correspondant au type de thermocouple utilisé puis à un dispositif d'affichage de température (non représentés).

Un échantillon pourra être posé directement sur la surface d'accueil 11 en contact thermique direct avec la jonction de mesure 13.0. Le thermocouple assurera alors une mesure de température plus précise que dans l'art antérieur, la température de la jonction de mesure est celle de l'échantillon. Les incertitudes sur la mesure de la température de l'échantillon sont minimisées.

Cette configuration est très facile d'utilisation, l'échantillon s'il est de petite taille, par exemple inférieur au millimètre peut reposer en totalité sur la jonction de mesure. Cela permet de réaliser une mesure de température extrêmement précise.

En variante, notamment si l'échantillon est liquide ou risque de se liquéfier lors du chauffage ou risque de réagir avec la surface d'accueil 11, on place l'échantillon dans une nacelle 23 qui elle reposera sur la surface d'accueil 11. Cela concerne par exemple des échantillons en liquides silicatés ou en métaux fondus. Ainsi on évite toute interaction de l'échantillon avec la surface d'accueil. La nacelle 23 peut être réalisée en platine ou en alumine par exemple. Le choix du matériau de la nacelle dépend bien sûr du matériau de l'échantillon qu'elle doit contenir.

Le porte-échantillon objet de l'invention peut être utilisé avec n'importe quel mode de chauffage sauf les dispositifs de chauffage à induction puisque le thermocouple est directement intégré dans le porte-échantillon.

Le porte-échantillon objet de l'invention est robuste et réutilisable d'une expérience à une autre, dans la mesure où l'échantillon n'a pas interagi avec le porte-échantillon. En cas de doute, l'emploi de la nacelle est préconisé.

La température de l'échantillon est mesurée en temps réel par le thermocouple. Il est possible que le thermocouple serve également pour un asservissement de la température du dispositif de chauffage.

La géométrie massive du porte-échantillon à partir de pièces tubulaires délimitant une cuvette dont le fond porte la jonction de mesure permet de minimiser les fuites thermiques par conduction et radiations.

La configuration illustrée aux figures 3A et 3C avec des conducteurs qui sont accessibles du côté de la surface d'accueil permet une mise en place et un retrait du porte-échantillon simple et rapide.

La configuration illustrée à la figure 3B avec des conducteurs qui restent à l'extrémité du porte-échantillon opposée à celle portant la surface d'accueil permet de libérer de l'espace du côté de la surface d'accueil puisque les conducteurs ne sont pas présents au voisinage de la surface d'accueil. Par contre, cette configuration est préconisée dans un emploi sédentaire dans le dispositif de chauffage. Le porte-échantillon est plus difficile à mettre en place et à ôter. Ce porte-échantillon convient parfaitement lorsque l'on a plusieurs séries d'expérience à réaliser dans des conditions identiques.

Le thermocouple ne modifie pas l'environnement de l'échantillon et par là même ne perturbe pas les signaux collectés lors des expériences.

Les applications possibles du porte-échantillon objet de l'invention sont celles pour lesquelles on doit réaliser des mesures de température d'un échantillon exactes et fidèles.

Ce porte-échantillon peut être utilisé dans tous les appareils de caractérisation de matériaux miniaturisés dans lesquels l'échantillon est chauffé.

On va maintenant donner des résultats expérimentaux obtenus avec un porte-échantillon tel que celui illustré à la figure 3A dans lequel les conducteurs sont accessibles du côté de la surface d'accueil de l'échantillon. L'échantillon est de l'or. Le porte-échantillon placé dans un four a été chauffé et des mesures de température ont été faites à partir d'une température de consigne imposée au four de 700°C. Cette température de consigne a été mesurée par un second thermocouple dont la jonction de mesure a été disposée contre la paroi extérieure du dispositif de chauffage comme l'illustre la figure 1 avec la référence numérique 6.

La température a été augmentée jusqu'à ce que l'échantillon en or fonde. L'échantillon a été maintenu pendant environ 10 minutes à un palier de température avant de relever la température donnée par le thermocouple du porte-échantillon. Les températures de consigne et données par le thermocouple sont regroupées dans le tableau 1 suivant :

**Tableau 1**

| **Température Consigne °C** | **Température Thermocouple °C** |
|---|---|
| 704 | 610 |
| 814 | 711 |
| 853 | 749 |
| 903 | 795 |
| 1002 | 891 |
| 1054 | 942 |
| 1104 | 991 |
| 1154 | 1039 |
| 1174 | 1058 |
| 1179 | 1061 |

La température de consigne pour laquelle la fusion de l'échantillon a été observée est de 1179°C. On rappelle que la température de fusion de l'or est de 1064°C.

La température donnée par le thermocouple intégré au porte-échantillon et compensée par la température de la jonction de compensation est de 1062°C. L'écart entre la température de consigne et la température de fusion de l'or est de 115°c alors que l'écart entre la température mesurée par le thermocouple intégré au porte-échantillon et la température de fusion de l'or n'est que de 3°C. La précision de la mesure est bien meilleure que dans la configuration de l'art antérieur.

Le tableau 2 illustre les températures de consigne et les températures mesurées par le thermocouple intégré au porte-échantillon conforme à celui de la figure 3A. Dans ce tableau 2, on a porté pour le thermocouple intégré la température dynamique, mesurée à la volée et la température mesurée après un palier de stabilisation à une température donnée de 10 minutes. Le programme de chauffe a été réalisé entre 150°C et 800°C. Les paliers de stabilisation ont été réalisés tous les 50°C. La rampe de montée en température est de 20°C par minute.

**Tableau 2**

| **Température Consigne** | **Thermocouple** | **Thermocouple** |
|---|---|---|
| | **T dynamique** | **T après stabilisation** |
| °C | °C | °C |
| 150 | 126 | 143 |
| 198 | 168 | 186 |
| 249 | 212 | 230 |
| 298 | 255 | 271 |
| 349 | 296 | 314 |
| 400 | 344 | 360 |
| 448 | 385 | 399 |
| 501 | 427 | 447 |
| 551 | 473 | 490 |
| 601 | 518 | 535 |
| 625 | 545 | Non relevée |
| 650 | 564 | 581 |
| 675 | 591 | Non relevée |
| 696 | 610 | 623 |
| 725 | 636 | Non relevée |
| 748 | 657 | 669 |
| 775 | 682 | Non relevée |
| 797 | 702 | 714 |

Le graphique de la figure 5 a été obtenu à partir de ces mesures, il représente une courbe d'étalonnage et on s'aperçoit que l'écart entre la température dynamique et la température après stabilisation varie entre 10°C et 20°C sur toute la gamme de température.

Le tableau 3 illustre un programme de chauffe réalisé entre environ la température ambiante et une température de consigne de 1100°C sans palier de stabilisation avec une rampe de montée en température de 10°C par minute. Les températures de consigne et les températures données par le thermocouple intégré au porte-échantillon conforme à celui illustré sur la figure 3A ont été relevées.

**Tableau 3**

| **Consigne** | **Thermocouple** |
|---|---|
| **°C** | **°C** |
| 90 | 52 |
| 120 | 100 |
| 140 | 124 |
| 150 | 135 |
| 160 | 145 |
| 165 | 150 |
| 170 | 155 |
| 175 | 159 |
| 180 | 161 |
| 185 | 165 |
| 190 | 169 |
| 195 | 172 |
| 200 | 177 |
| 205 | 182 |
| 210 | 185 |
| 215 | 191 |
| 220 | 195 |
| 225 | 199 |
| 230 | 203 |
| 235 | 208 |
| 240 | 212 |
| 245 | 217 |
| 250 | 221 |
| 255 | 225 |
| 260 | 230 |
| 265 | 235 |
| 270 | 238 |
| 275 | 243 |
| 280 | 247 |
| 285 | 252 |
| 290 | 256 |
| 300 | 265 |
| 305 | 270 |
| 310 | 274 |
| 315 | 279 |
| 320 | 282 |
| 325 | 286 |
| 330 | 290 |
| 335 | 294 |
| 340 | 297 |
| 345 | 301 |
| 350 | 307 |
| 355 | 319 |
| 360 | 320 |
| 365 | 322 |
| 370 | 326 |
| 375 | 329 |
| 380 | 333 |
| 385 | 336 |
| 390 | 341 |
| 395 | 345 |
| 400 | 349 |
| 405 | 353 |
| 410 | 358 |
| 420 | 366 |
| 425 | 370 |
| 430 | 375 |
| 435 | 379 |
| 440 | 383 |
| 445 | 388 |
| 450 | 393 |
| 455 | 398 |
| 460 | 402 |
| 465 | 405 |
| 470 | 409 |
| 475 | 412 |
| 480 | 417 |
| 485 | 421 |
| 490 | 425 |
| 495 | 429 |
| 500 | 433 |
| 505 | 437 |
| 510 | 442 |
| 515 | 447 |
| 520 | 452 |
| 525 | 456 |
| 530 | 460 |
| 535 | 464 |
| 550 | 478 |
| 555 | 482 |
| 560 | 487 |
| 565 | 492 |
| 570 | 495 |
| 5675 | 501 |
| 580 | 505 |
| 585 | 510 |
| 590 | 514 |
| 600 | 523 |
| 605 | 527 |
| 610 | 531 |
| 615 | 536 |
| 635 | 554 |
| 640 | 560 |
| 650 | 567 |
| 660 | 577 |
| 670 | 587 |
| 680 | 596 |
| 690 | 607 |
| 700 | 616 |
| 710 | 623 |
| 730 | 643 |
| 740 | 652 |
| 750 | 660 |
| 760 | 670 |
| 770 | 677 |
| 780 | 685 |
| 790 | 694 |
| 800 | 704 |
| 820 | 721 |
| 830 | 730 |
| 830 | 730 |
| 840 | 741 |
| 850 | 750 |
| 860 | 760 |
| 870 | 770 |
| 880 | 780 |
| 895 | 796 |
| 901 | 805 |
| 911 | 810 |
| 920 | 820 |
| 930 | 831 |
| 945 | 842 |
| 950 | 850 |
| 965 | 865 |
| 970 | 869 |
| 980 | 880 |
| 990 | 890 |
| 998 | 902 |
| 1010 | 911 |
| 1020 | 919 |
| 1052 | 960 |
| 1066 | 966 |
| 1078 | 977 |
| 1093 | 992 |
| 1098 | 1002 |

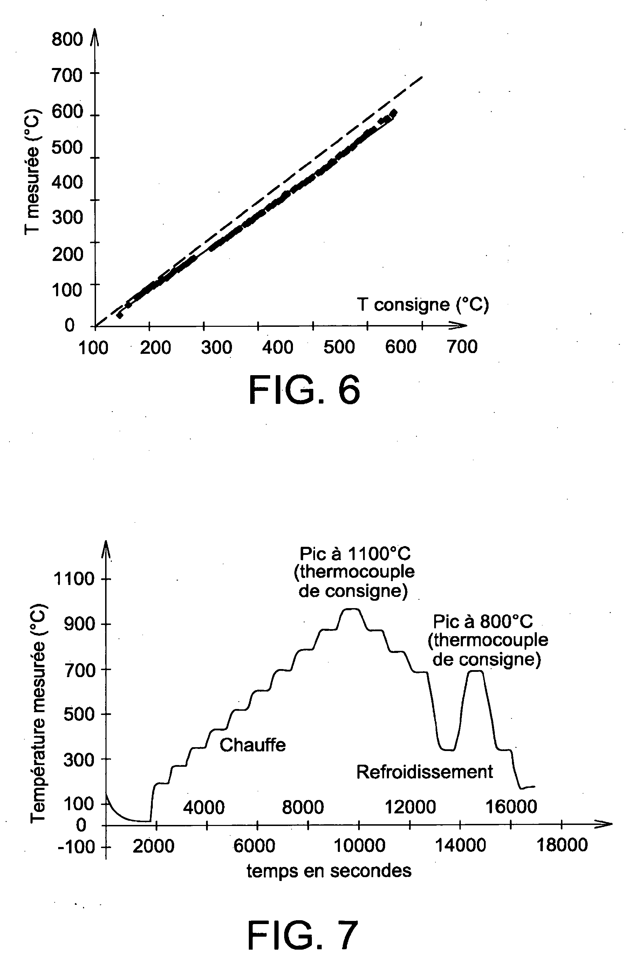

Le graphique de la figure 6 illustre la courbe d'étalonnage obtenue lors de ce programme de chauffe. L'écart entre la température mesurée par le thermocouple intégré et la température de consigne est au maximum de 100°C.

Le tableau 4 ci-dessous illustre le comportement du thermocouple intégré dans le porte-échantillon illustré à la figure 3A lors d'un cycle de chauffage jusqu'à une température de consigne de 1100°C puis de refroidissement. Des paliers de stabilisation de minimum 5 minutes ont été respectés. La rampe de température est de 20°C par minute au début puis de 40°C par minute lors de la fin du refroidissement. Le temps total correspond à la durée de l'essai au moment de l'acquisition. L'essai a duré plus de quatre heures soit plus de 14400 secondes.

**Tableau 4**

| **Température à atteindre** | **Pente** | **Temps** | **Temps Total :** |
|---|---|---|---|
| °C | **(°C/min)** | **(min)** | |
| 200 | | 10 | 10 |
| | 20 | 5 | 15 |
| 300 | | 10 | 25 |
| | 20 | 5 | 30 |
| 400 | | 10 | 40 |
| | 20 | 5 | 45 |
| 500 | | 10 | 55 |
| | 20 | 5 | 60 |
| 600 | | 10 | 70 |
| | 20 | 5 | 75 |
| 700 | | 10 | 85 |
| | 20 | 5 | 90 |
| 800 | | 10 | 100 |
| | 20 | 5 | 105 |
| 900 | | 10 | 115 |
| | 20 | 5 | 120 |
| 1000 | | 10 | 130 |
| | 20 | 5 | 135 |
| 1100 | | 10 | 145 |
| | 20 | 5 | 150 |
| 900 | | 10 | 160 |
| | 20 | 5 | 165 |
| 800 | | 10 | 175 |
| | 40 | 10 | 185 |
| 400 | | 10 | 195 |
| | 40 | 10 | 205 |
| 800 | | 10 | 215 |
| | 40 | 10 | 225 |
| 400 | | 10 | 235 |
| | 40 | 5 | 240 |
| 200 | | 10 | 250 |

Le graphique de la figure 7 illustre le suivi de la température de l'échantillon, c'est-à-dire de la température délivrée par le thermocouple intégré pendant le traitement thermique appliqué. Les deux pics correspondent températures de 1100°C et de 800°C délivrées par le second thermocouple dont la jonction de mesure a été disposée contre la paroi extérieure du dispositif de chauffage comme l'illustré la figure 1 avec la référence numérique 6.

Le graphique obtenu permet de vérifier que le temps de stabilisation du thermocouple est inférieur à 3 minutes sur toute la gamme de températures traversée, de vérifier qu'une fois la température de palier atteinte, il n'y a pas de dérive dans le temps de la valeur de la température mesurée.

Par ailleurs, le dernier palier en température effectué en fin de programme a permis de montrer que la valeur de température lue après une montée en température directe à la température de consigne de 800°C est la même que celle obtenue lors du programme de température précédent pour la même température de consigne. Il n'y a pas d'influence du programme de température appliqué sur la réponse du thermocouple.

Bien que plusieurs modes de réalisation du porte-échantillon objet de l'invention aient été représentés et décrits de façon détaillée, on comprendra que différents changements et modifications pourront être apportés notamment aux premiers et seconds moyens de guidage sans sortir du cadre de l'invention. Le porte-échantillon objet de l'invention peut bien sûr être utilisé dans toute application nécessitant un contrôle de température et pas seulement dans les appareils de caractérisation de matériaux par interaction rayonnement/matériaux.

## Revendications

1. Porte-échantillon comportant :
un corps porte-échantillon (10) en matériau diélectrique réfractaire,
un thermocouple (13) pour mesurer la température de l'échantillon, notamment lors d'un chauffage, formé de deux conducteurs (13.1, 13.2) de natures différentes, reliés en une jonction de mesure (13.0), le corps porte-échantillon comportant une surface d'accueil (11) sur laquelle est collée la jonction de mesure (13.0), cette surface d'accueil étant une surface d'accueil de l'échantillon,
une gaine de protection (17) du corps porte-échantillon qui entoure le corps porte-échantillon en formant un rebord autour de la surface d'accueil (11) de manière à délimiter une cuvette (18) d'accueil de l'échantillon dont le fond est la surface d'accueil de l'échantillon (11),
des premiers moyens de guidage (14) des conducteurs pour les isoler électriquement l'un de l'autre à partir de la jonction de mesure, les conducteurs (13.1, 13.2) sortant des premiers moyens de guidage (14) à l'opposé de la surface d'accueil (11) par rapport au corps porte-échantillon (10), **caractérisé en ce que** le corps porte-échantillon et/ou la gaine de protection comportent en outre des seconds moyens de guidage (16) pour guider les conducteurs (13.1, 13.2) depuis leur sortie des premiers moyens de guidage (14) vers la surface d'accueil (11) de manière à ce que les conducteurs soient accessibles du côté de la surface d'accueil.

2. Porte-échantillon selon la revendication 1, dans lequel le corps porte-échantillon est un tube bifilaire avec deux trous traversants (12.1, 12.2) longitudinaux, la surface d'accueil étant une surface d'extrémité sensiblement transversale du tube bifilaire, les premiers moyens de guidage (14) comprenant les deux trous traversants (12.1, 12.2).

3. Porte-échantillon selon la revendication 1, dans lequel le corps porte-échantillon est un barreau plein, la surface d'accueil (11) étant une surface d'extrémité sensiblement transversale du barreau, les premiers moyens de guidage (14) comprenant deux rainures (14.1, 14.2), sensiblement longitudinales portées par le barreau.

4. Porte-échantillon selon l'une des revendications 1 à 3, dans lequel les seconds moyens de guidage (16) sont des rainures (16.1, 16.2) latérales portées par le corps porte-échantillon (10) et/ou par la gaine de protection (17).

5. Porte-échantillon selon l'une des revendications 1 à 4, dans lequel la gaine de protection (17) dépasse du corps porte-échantillon (10) à l'opposé de la surface d'accueil (11) par rapport au corps porte-échantillon (10) et délimite un espace (20) dans lequel les conducteurs (13.1, 13.2) sont scellés en sortie des premiers moyens de guidage (14).

6. Porte-échantillon selon l'une des revendications 2 ou 3, dans lequel la gaine de protection (17) est un tube monofilaire enfilé autour du tube bifilaire ou du barreau.

7. Porte-échantillon selon la revendication 1 à 6, dans lequel la gaine de protection (17) est pourvue d'encoches d'écartement (19.1, 19.2) sensiblement radiales pour écarter les conducteurs (13.1, 13.2) à leur sortie des premiers moyens de guidage (14).

8. Porte-échantillon selon l'une des revendications précédentes dans lequel la jonction de mesure (13.0) est fixée à la surface d'accueil (11) par du ciment réfractaire (15), la surface d'accueil (11) étant sensiblement plane notamment au niveau de la jonction de mesure (13.0) et du ciment (15).

9. Porte-échantillon selon l'une des revendications précédentes, comportant en outre une nacelle (23) d'accueil de l'échantillon placée dans la cuvette (18), cette nacelle (23) étant amovible.

10. Ensemble comportant un porte-échantillon selon l'une des revendications précédentes et un dispositif de chauffage (21) du porte-échantillon, le dispositif de chauffage (21) comportant un thermocouple pour asservir sa température, **caractérisé en ce que** le thermocouple (13) du porte-échantillon sert à asservir la température du dispositif de chauffage (21).

11. Appareil de caractérisation de matériaux par interaction rayonnement/matériaux comportant un ensemble selon la revendication 10.

12. Procédé de réalisation d'un porte-échantillon comportant les étapes suivantes :
fourniture d'un corps porte-échantillon (10) en matériau diélectrique réfractaire possédant une surface d'accueil (11) de l'échantillon et d' un thermocouple (13) possédant deux conducteurs (13.1, 13.2) en matériaux de nature différente reliés entre eux en une jonction de mesure (13.0),
fixation de la jonction de mesure (13.0) sur la surface d'accueil (11) avec un ciment réfractaire (15),
dans lequel le corps porte-échantillon possède des moyens de guidage (14) dits premiers moyens de guidage des conducteurs (13.1, 13.2) pour les isoler électriquement l'un de l'autre à partir de la jonction de mesure (13.0),
mise en place des conducteurs (13.1, 13.2) dans les premiers moyens de guidage (14) de manière à ce qu'ils sortent des premiers moyens de guidage (14) à l'opposé de la surface d'accueil (11) par rapport au corps porte-échantillon (1),
polissage de la jonction de mesure (13.0) et du ciment réfractaire (15) pour parfaire l'état de surface et la planéité de la surface d'accueil,
recuit du porte-échantillon (10) pour faire dégazer le ciment réfractaire,
positionnement du corps porte-échantillon (10) dans une gaine de protection (17) en laissant dépasser la gaine de protection au-delà de la surface d'accueil de manière à former une cuvette (18) ayant comme fond la surface d'accueil (11) et
solidarisation du corps porte-échantillon (10) avec la gaine de protection (17),
dans lequel le corps porte-échantillon (10) ou la gaine de protection (17) comporte en outre des seconds moyens de guidage (16) pour guider les conducteurs (13.1, 13.2) depuis leur sortie des premiers moyens de guidage (14) vers la surface d'accueil (11) de manière à ce que les conducteurs soient accessibles du côté de la surface d'accueil, le procédé comprenant une étape de mise en place des conducteurs (13.1, 13.2) dans les seconds moyens de guidage (16), cette étape de mise en place ayant lieu avant l'étape positionnement du corps porte-échantillon dans la gaine de protection, si les seconds moyens de guidage (16) sont portés par le corps porte-échantillon (10) ou après l'étape de solidarisation si les seconds moyens de guidage (16) sont portés par la gaine de protection (17).

13. Procédé selon la revendication 12, dans lequel on réitère le couple d'étapes de polissage et de recuit autant de fois qu'il est nécessaire en remettant du ciment réfractaire (15) avant chaque étape de polissage.

## Patentansprüche

1. Probenhalter, enthaltend:
einen Probenhalterkörper (10) aus feuerfestem, dielektrischen Material,
ein Thermoelement (13) zum Messen der Temperatur der Probe, insbesondere bei einem Erhitzen, das aus zwei Leitern (13.1, 13.2) unterschiedlicher Beschaffenheit gebildet ist, die an einer Messverbindungsstelle (13.0) verbunden sind, wobei der Probenhalterkörper eine Aufnahmefläche (11) aufweist, an welcher die Messverbindungsstelle (13.0) anhaftet, wobei diese Aufnahmefläche eine Aufnahmefläche zum Aufnehmen der Probe ist,
eine Schutzhülle (17) für den Probenhalterkörper, die den Probenhalterkörper umgibt und dabei eine Randleiste um die Aufnahmefläche (11) herum bildet, so dass eine Schale (18) zum Aufnehmen der Probe eingegrenzt wird, deren Boden die Aufnahmefläche (11) für die Probe ist,
erste Führungsmittel (14) zum Führen der Leiter, um sie ausgehend von der Messverbindungsstelle elektrisch voneinander zu isolieren, wobei die Leiter (13.1, 13.2) bezüglich des Probenhalterkörpers (10) entgegengesetzt zur Aufnahmefläche (11) aus den ersten Führungsmitteln (14) austreten, **dadurch gekennzeichnet, dass** der Probenhalterkörper und/oder die Schutzhülle ferner zweite Führungsmittel (16) zum Führen der Leiter (13.1, 13.2) ausgehend von ihrem Austritt aus den ersten Führungsmitteln (14) zur Aufnahmefläche (11) hin aufweisen, so dass die Leiter auf der Seite der Aufnahmefläche zugänglich sind.

2. Probenhalter nach Anspruch 1, wobei der Probenhalterkörper eine Doppelrohrleitung mit zwei longitudinalen Durchgangslöchern (12.1, 12.2) ist, wobei die Aufnahmefläche eine im Wesentlichen quer verlaufende Endfläche der Doppelrohrleitung ist, wobei die ersten Führungsmittel (14) die beiden Durchgangslöcher (12.1, 12.2) aufweisen.

3. Probenhalter nach Anspruch 1, wobei der Probenhalterkörper ein Vollstab ist, wobei die Aufnahmefläche (11) eine im Wesentlichen quer verlaufende Endfläche des Stabs ist, wobei die ersten Führungsmittel (14) zwei im Wesentlichen longitudinale Nuten (14.1, 14.2) aufweisen, die sich an dem Stab befinden.

4. Probenhalter nach einem der Ansprüche 1 bis 3, wobei die zweiten Führungsmittel (16) seitliche Nuten (16.1, 16.2) sind, die sich an dem Probenhalterkörper (10) und/oder an der Schutzhülle (17) befinden.

5. Probenhalter nach einem der Ansprüche 1 bis 4, wobei die Schutzhülle (17) bezüglich des Probenhalterkörpers (10) entgegengesetzt zur Aufnahmefläche (11) von dem Probehalterkörper (10) vorsteht und einen Raum (20) begrenzt, in welchem die Leiter (13.1, 13.2) am Austritt aus den ersten Führungsmitteln (14) versiegelt sind.

6. Probenhalter nach einem der Ansprüche 2 oder 3, wobei die Schutzhülle (17) eine Einfachrohrleitung ist, die um die Doppelrohrleitung oder um den Stab herum aufgeschoben ist.

7. Probenhalter nach Anspruch 1 bis 6, wobei die Schutzhülle (17) mit im Wesentlichen radial verlaufenden Abstandskerben (19.1, 19.2) versehen ist, um die Leiter (13.1, 13.2) an ihrem Austritt aus den ersten Führungsmitteln (14) zu beabstanden.

8. Probenhalter nach einem der vorangehenden Ansprüche, wobei die Verbindungsmessstelle (13.0) an der Aufnahmefläche (11) mit feuerfestem Zement (15) befestigt ist, wobei die Aufnahmefläche (11) im Wesentlichen eben ist, insbesondere im Bereich der Messverbindungsstelle (13.0) und des Zements (15).

9. Probenhalter nach einem der vorangehenden Ansprüche, ferner enthaltend ein Aufnahmegefäß (23) zum Aufnehmen der Probe, das in der Schale (18) angeordnet ist, wobei dieses Gefäß (23) abnehmbar ist.

10. Einheit mit einem Probenhalter nach einem der vorangehenden Ansprüche und einer Heizvorrichtung (21) für den Probenhalter, wobei die Heizvorrichtung (21) ein Thermoelement zum Regeln ihrer Temperatur aufweist, **dadurch gekennzeichnet, dass** das Thermoelement (13) des Probenhalters dazu dient, die Temperatur der Heizvorrichtung (21) zu regeln.

11. Gerät zum Kennzeichnen von Materialien durch Wechselwirkung von Strahlung/Materialien mit einer Einheit nach Anspruch 10.

12. Verfahren zum Herstellen eines Probenhalters, umfassend die nachfolgenden Schritte:
Bereitstellen eines Probenhalterkörpers (10) aus feuerfestem, dielektrischen Material mit einer Aufnahmefläche (11) zum Aufnehmen der Probe und eines Thermoelements (13) mit zwei Leitern (13.1, 13.2) aus Materialien unterschiedlicher Beschaffenheit, die an einer Messverbindungsstelle (13.0) miteinander verbunden sind,
Befestigen der Messverbindungsstelle (13.0) an die Aufnahmefläche (11) mit einem feuerfesten Zement (15),
wobei der Probenhalterkörper Führungsmittel (14) besitzt, sogenannte erste Führungsmittel zum Führen der Leiter (13.1, 13.2), um sie ausgehend von der Messverbindungsstelle (13.0) elektrisch voneinander zu isolieren,
Einsetzen der Leiter (13.1, 13.2) in die ersten Führungsmittel (14) derart, dass sie bezüglich des Probenhalterkörpers (1) entgegengesetzt zur Aufnahmefläche (11) aus den ersten Führungsmitteln (14) austreten,
Polieren der Messverbindungsstelle (13.0) und des feuerfesten Zements (15), um den Oberflächenzustand und die Ebenheit der Aufnahmefläche zu verbessern,
Anlassen des Probenhalters (10) zum Entgasen des feuerfesten Zements,
Anordnen des Probenhalterkörpers (10) in einer Schutzhülle (17) unter Vorstehenlassen der Schutzhülle über die Aufnahmefläche hinaus, so dass eine Schale (18) gebildet wird, die als Boden die Aufnahmefläche (11) aufweist, und
Verbinden des Probenhalterkörpers (10) mit der Schutzhülle (17),
wobei der Probenhalterkörper (10) bzw. die Schutzhülle (17) ferner zweite Führungsmittel (16) zum Führen der Leiter (13.1, 13.2) ausgehend von ihrem Austritt aus den ersten Führungsmitteln (14) zur Aufnahmefläche (11) hin aufweisen, so dass die Leiter auf der Seite der Aufnahmefläche zugänglich sind, wobei das Verfahren einen Schritt des Einsetzens der Leiter (13.1, 13.2) in die zweiten Führungsmittel (16) umfasst, wobei dieser Schritt des Einsetzens vor dem Schritt des Anordnens des Probenhalterkörpers in der Schutzhülle dann erfolgt, wenn die zweiten Führungsmittel (16) von dem Probenhalterkörper (10) getragen werden, oder aber nach dem Schritt des Verbindens dann, wenn die zweiten Führungsmittel (16) von der Schutzhülle (17) getragen werden.

13. Verfahren nach Anspruch 12, wobei die Paarung von Schritten des Polierens und des Anlassens sooft wie erforderlich wiederholt wird, indem vor jedem Polierschritt erneut feuerfester Zement (15) aufgetragen wird.

## Claims

1. Sample holder comprising:
a sample-holding body (10) made of a refractory dielectric material,
a thermocouple (13) for measuring the temperature of the sample, in particular during heating, formed of two conductors (13.1, 13.2) which are different in nature, connected in a measurement junction (13.0), the sample-holding body comprising a receiving surface (11) on which is adhesively bonded the measurement junction (13.0), this receiving surface being a receiving surface of the sample,
a protective sheath (17) of the sample-holding body which encloses the sample-holding body by forming a rim around the receiving surface (11) in such a way as to define a bowl (18) for receiving the sample the bottom of which is the receiving surface of the sample (11),
first means for guiding (14) conductors in order to electrically isolate one from the other starting from the measurement junction, the conductors (13.1, 13.2) exiting from the first means for guiding (14) opposite the receiving surface (11) with respect to the sample-holding body (10), **characterised in that** the sample-holding body and/or the protective sheath further comprise second means for guiding (16) to guide the conductors (13.1, 13.2) from their exit from the first means for guiding (14) to the receiving surface (11) in such a way that the conductors can be accessed from the side of the receiving surface.

2. Sample holder according to claim 1, wherein the sample-holding body is a two-wire tube with two longitudinal through holes (12.1, 12.2), the receiving surface being a substantially transversal end surface of the two-wire tube, the first means for guiding (14) comprising the two through holes (12.1, 12.2).

3. Sample holder according to claim 1, wherein the sample-holding body is a solid bar, the receiving surface (11) being a substantially transversal end surface of the bar, the first means for guiding (14) comprising two substantially longitudinal grooves (14.1, 14.2) carried by the bar.

4. Sample holder according to one of claims 1 to 3, wherein the second means for guiding (16) are lateral grooves (16.1, 16.2) carried by the sample-holding body (10) and/or by the protective sheath (17).

5. Sample holder according to one of claims 1 to 4, wherein the protective sheath (17) extends beyond the sample-holding body (10) opposite the receiving surface (11) with respect to the sample-holding body (10) and defines a space (20) wherein the conductors (13.1,13.2) are sealed at the output of the first means for guiding (14).

6. Sample holder according to one of claims 2 or 3, wherein the protective sheath (17) is a single-wire tube threaded around the two-wire tube or bar.

7. Sample holder according to claim 1 to 6, wherein the protective sheath (17) is provided with substantially radial separation notches (19.1, 19.2) in order to separate the conductors (13.1, 13.2) at their exiting from the first means for guiding (14).

8. Sample holder according to one of the preceding claims wherein the measurement junction (13.0) is fixed to the receiving surface (11) via refractory cement (15), the receiving surface (11) being substantially flat in particular on the measurement junction (13.0) and the cement (15).

9. Sample holder according to one of the preceding claims, further comprising a cradle (23) for receiving the sample placed in the bowl (18), this cradle (23) being removable.

10. Unit comprising a sample holder according to one of the preceding claims and a device for heating (21) the sample holder, the heating device (21) comprising a thermocouple in order to control the temperature, **characterised in that** the thermocouple (13) of the sample holder is used to control the temperature of the heating device (21).

11. Device for characterising materials via radiation/material interaction comprising a unit according to claim 10.

12. Method for realizing a sample holder comprising the following steps:
supplying a sample-holding body (10) made of a refractory dielectric material that has a receiving surface (11) of the sample and a thermocouple (13) that has two conductors (13.1, 13.2) made of materials which are different in nature connected together in a measurement junction (13.0),
fastening the measurement junction (13.0) on the receiving surface (11) with a refractory cement (15),
wherein the sample-holding body has means for guiding (14) called first means for guiding conductors (13.1, 13.2) in order to electrically isolate one from the other starting from the measurement junction (13.0),
setting up the conductors (13.1, 13.2) in the first means for guiding (14) in such a way that they exit from the first means for guiding (14) opposite the receiving surface (11) with respect to the sample-holding body (1),
polishing the measurement junction (13.0) and the refractory cement (15) in order to perfect the surface condition and the flatness of the receiving surface,
annealing the sample holder (10) in order to degas the refractory cement,
positioning the sample-holding body (10) in a protective sheath (17) by allowing the protective sheath to extend beyond the receiving surface in such a way as to form a bowl (18) that has as a bottom the receiving surface (11) and
attaching the sample-holding body (10) with the protective sheath (17),
wherein the sample-holding body (10) or the protective sheath (17) further comprises second means for guiding (16) in order to guide the conductors (13.1, 13.2) from their exiting from first means for guiding (14) to the receiving surface (11) in such a way that the conductors can be accessed from the side of the receiving surface, the method comprising a step of setting up the conductors (13.1, 13.2) in the second means for guiding (16), this setting up step taking place before the step of positioning the sample-holding body in the protective sheath, if the second means for guiding (16) are carried by the sample-holding body (10), or after the step of attaching if the second means for guiding (16) are carried by the protective sheath (17).

13. Method according to claim 12, wherein the pair of polishing and annealing steps are reiterated as many times as necessary by adding refractory cement, (15) before each step of polishing.
